# EUROPEAN PATENT SPECIFICATION

(11) **EP 2 270 490 B1**
(45) Date of publication and mention of the grant of the patent: **25.01.2017**
(21) Application number: 09008332.0
(22) Date of filing: 25.06.2009
(51) Int. Cl.: G01N 30/20, G01N 30/22, G01N 27/447

(54) **Apparatus for high pressure proportionating, injecting and/or routing analyte sample solutions**
Vorrichtung zur Hochdruckproportionierung, Injektion und/oder zum Routing von Analytprobenlösungen
Appareil pour fournir à haute pression, injecter et/ou router des solutions d'échantillons d'analyses

(43) Date of publication of application: 05.01.2011
(73) Proprietor: Funke, Herbert, 85235 Pfaffenhofen/Glonn (DE)
(72) Inventor: Funke, Herbert, 85235 Pfaffenhofen/Glonn (DE)
(74) Representative: Strehl Schübel-Hopf & Partner

(56) References cited:
- EP-A- 0 225 779
- EP-A- 0 586 237
- EP-A- 1 443 330
- WO-A-2009/024171
- DE-U1-202005 011 825
- GB-A- 646 788
- GB-A- 2 172 073
- US-A- 3 150 517
- US-A- 3 748 833
- US-A- 3 800 602
- US-A- 3 973 792

## Description

### 1. Field of the Invention

The invention relates to an apparatus for injecting and/or routing analyte sample solutions in microlitre or nanolitre-scale according to the preamble of claim 1.

### 2. Background of the Invention

The Document WO 02/39105 discloses a sample injection valve for high-performance liquid chromatography (HPLC) devices comprising a stator plate with inlet ports for the analyte solution and with connections at both ends of a sample loop. Moreover, the valve features a movable part in the form of a rotor disk with connecting channels provided within the rotor disc. The rotor disk may be moved by a handle or motor/gear actuator in order to bring the ends of the connecting channels into flush position with respective bores in the stator plate such that the connecting channels may be moved into a sample loading position in which the connecting channel is connected to the sample inlet and to the sample outlet ports, and into a sample injecting position in which the connection channel is connected to the sample loop duct.

Sample injection valves with rotor-type movable bodies are comparatively large and are essentially limited to single-G:\Th\x3939 final24jun09.doc channel HPLC/chemical analysis applications. Multi-channel applications require multiple rotor valves and respective actuators associated in parallel, which design entails a cost intensive and complex implementation, specifically since the available installation space is limited by the distance between the rows of wells in a well plate typically utilised for storing and supplying the analyte solutions. EP 0 225 779 A (DOW CHEMICAL NEDERLAND , 16 June 1987), US 3 150 517 A (KUFFER FERNAND B ET AL, 29 September 1964) and DE 20 2005 011825 U1 (SLS MICRO TECHNOLOGY GMBH, 30 November 2006) disclose linearly moving valves for injecting a fluid sample into an analysis apparatus.

### 3. Summary of the Invention

The object of the invention is to provide an apparatus with reduced complexity and reduced costs for the sample injection when performing HPLC and capillary electrophoresis (CE) applications, specifically in conjunction with high sample throughput (HST) methods.

The object is achieved with an apparatus for proportionating, injecting and/or routing analyte sample solutions in microlitre- or nanolitre-scale into at least one high-pressure fluid stream according to claim 1.

The apparatus comprises at least one slider plate comprising at least one central bore and two complementary bores in at least one row, wherein the volume of the central bore in each row determines the sample solution volume to be injected and effects its proportionating. The apparatus further comprises a sample supply channel connected to said central bore in a sample loading position of the slider plate for loading an aliquot of the sample solution into said central bore, with one of the complementary bores in each row connecting the solvent/buffer supply inlet port with the pertinent outlet port for sustaining the corresponding fluid stream, and an actuator for moving the slider plate from the sample loading position into the sample injection position. In the sample loading position, an aliquot of the sample solution may be loaded into the sample bore and transferred to the main fluidic stream by sliding the slider plate into its sample injection position, in which the fluid stream flows through the sample bore and conveys the sample solution aliquot loaded therein in the downstream direction into the pertinent analysis system.

One of the characteristic features of the invention is that the apparatus further comprises a top stator plate and a bottom stator plate sandwiching the slider plate. The slider plate may in particular be supported in such a way that it allows a linear movement of the slider plate between the loading position and the sample injection position.

The provision of a linear slider instead of a rotor disk enables a simplified parallel array system for the sample injection procedure. In parallel mode an array of bores within the slider allows injecting sample solution aliquots into a multiplicity of fluid streams. In an advantageous embodiment of the invention, the slider plate comprises at least two rows of bores, preferably a number of 4 to 16 parallel rows of bores for routing multiple fluid streams and injecting the sample solution aliquots into said fluid streams. Each row of bores may in particular comprise three bores. Further possible embodiments of the invention have eight or more rows of bores at a distance preferably corresponding to integer multiples of the distance between the well rows in a standard well plate.

A further aspect of the invention is to combine the sample injection apparatus with a movable support enabling a horizontal and vertical positioning (in x,y,z direction referred to the well plate) of a well plate for sucking in the sample solution aliquot into the sample bores in the slider plate during the sample loading procedure. Instead of moving the entire sample injecting sandwich assembly bearing the sample uptake tube nozzles, the wells of the well plate may be brought into a position which is required for an appropriate immersion of the tube nozzle tips into the sample solutions. By positioning the well plate prior to the sample loading procedure instead of positioning the sample injecting sandwich assembly, the carrying out of the sample injection procedure on the basis of channels arranged in parallel may be further simplified.

The slider plate and/or the top stator plate and the bottom stator plate are preferably made of engineering ceramics, e.g. zirconia (TZP-Y), alumina, silicon nitride, silicon carbide or alternatively, be made from a special polymer such as pure or filled PEEK. Additionally one or more of the peripheral assembly components may be made of pure or filled polyether ether ketone (PEEK). The materials of choice should exhibit chemical inertness and mechanical resistance and at the same time, allow a favourable tribological pairing with each other, wherein the friction should be kept as low as possible.

In order to achieve a uniform preloading within the sample injecting sandwich assembly, it is proposed to fit the slider plate with at least one slot hole or notch for feeding through a tensioning element, with said element pressing the top stator plate and the bottom stator plate and the slider plate containing liquid at high pressure tightly onto each other. The preloading is effected such that the tensioning element may be e.g. a socket screw in conjunction with disk springs or wave springs. In preferred embodiments, for achieving a uniform preloading a series of slot holes is distributed over the slider plate forming an adequate modular grid. Alternatively, preloading may be effected pneumatically or hydraulically, with the sample injecting sandwich assembly fitted into a suitable clamp housing. For obtaining adequate mounting space for the tensioning elements, only every second row of the well plate wells may be utilised for an individual analytical run and, subsequently, the well plate may be moved sideways to the adjacent row when carrying out the next analytical run, thus using the rows of wells omitted before.

The top plate and/or the bottom stator plate may be provided with fitting connections for fluidicly connecting at least a sample loading tube nozzle and a tube establishing a fluid line to the solvent/buffer supply channel and to the fluid flow channel leading to the analysis system, respectively.

Preferably, the diameter of at least the sample intake bores is essentially identical to the diameter of the sample storing bores in the slider plate in order to establish a smooth cross-sectional interface area when moving said bores in flush position.

In order to ensure a flush alignment of the bores in the stator plates and the bore in the (movable) slider plate, and thus preventing a distortion of the flow patterns, all bores have to be exactly positioned within a modular grid when being machined. For ensuring a sufficiently precise alignment, the bore positions in the slider plate may be verified by measurements during the machining and subsequently, the pertinent bores in the top stator plate and the bottom stator plate may be individually adjusted to the measured positions of the bores in the slider plate. This in particular, in the case that the slider plate is made of engineering ceramics with the bores in the slider plate machined prior to the firing of the raw piece and facing a material shrinkage.

Any technically unavoidable variations of the sample bore volumes in the slider plate may be assessed and corrected for in conjunction with a series of analyses by performing an appropriate calibration procedure prior to initiating the series. If the top stator plate and the bottom stator plate are made of e.g. PEEK or CTFE rather than of engineering ceramics, the machining of the bores in question may be simplified due to a comparably less complex precision machining process.

The apparatus may be configured for use in conjunction with capillary electrophoresis by fitting the bottom stator plate with an electrode for each channel featuring a cross-sectional bore as direct flow-through liquid duct for the main fluid stream. The electrode should be liquid-tightly press-fitted into the stator plate and may form a peripheral extension of a buffer reservoir. At the distant end of each pertinent liquid duct/capillary, another buffer vessel with the counter electrode may be arranged, into which the capillary forming the liquid duct may be immersed.

The fitting connection for a capillary used in the apparatus of claim 1 comprises a polymer sealing bushing, a compression bushing and a backing bushing with the latter components preferably made from stainless steel or titanium. The fitting connection may in particular be used in connection with fused silica capillaries. The fitting connection is especially adapted to the small mounting space available in the apparatus described above. Specific constraints on the distance between the fitting connections are imposed by the distance pattern of the wells containing the sample solutions in the well plates. Complying with these constraints facilitates the use of commercially available standard well plates. Currently available standard fitting connections are too large to be used for all liquid connections of the apparatus according to the invention. However, standard fitting connections may be used at other locations, e.g. at the pure solvent/buffer supply ports in the bottom stator plate.

Preferably, a liquid connecting assembly features an inert metallic backing bushing made e.g. of stainless steel or titanium and a (polymer) sealing bushing with the latter component pressed into said backing bushing in such a way that a flat front face is formed which shape avoids any dead volume between said front side and the bottom of the pertinent receiving bore for said connecting assembly in one of the stator plates when being mounted/pressed into this bore to form a liquid tight seal.

The liquid connection assembly comprising the backing bushing, the sealing bushing and the compression bushing is preferably rigidly mounted by means of a buckle element featuring either a single or a dual wing depending on rigidly mounting either one or two liquid connections, with said element exerting only axial and no torsion compression forces.

In the fitting connection according to the invention, the backing bushing has a common bore for the sealing bushing and the compression bushing into the backing bushing. The section of said bore receiving the sealing bushing has a slightly conical shape for achieving a press-fit by squeeze ramming. The sealing bushing and the compression bushing are each provided with central bores for feeding through the pertinent fluid connection capillary.

The sealing bushing may preferably be made of polytetrafluoroethylene (PTFE).

The PTFE surface may preferably contact the external wall of the capillary end within the entire contact area. The sealing element may preferably be entirely made of PTFE.

It is proposed that the sample injection apparatus is held stationary, whereas the well plate is moved in a controlled and automated manner for aligning the above defined rows of wells in the well plate with the corresponding sample loading tube nozzles. After aligning the wells, the well plate is lifted in order to immerse the tips of the sample loading tube nozzles to a defined depth for sucking in an aliquot from the sample solution volume contained within the chosen well.

With the described inverse functional concept the possibility of establishing a highly compact and instrumentally simplified multi-channel array system may be introduced.

In particular, one or more of the wells in the well plate may be filled with pure solvent/buffer solution which can be sucked in by syringes via the slider/outlet stator plate liquid ducts, and by using either hydraulically or pneumatically driven flow in the opposite direction solvent/buffer solution may be expelled for the purpose of flushing the fluidic lines including the capillary tube nozzles.

Furthermore, depending on the metering precision of the micro syringe used for taking in the sample solution into the sample bore in the slider plate, the dead volume contributed by the sample transfer liquid duct can be made very small by applying a fluidic-sandwich method which involves sucking pure solvent/buffer subsequent to the termination of the net sample intake procedure until the central sample bore in the slider is fully loaded with the sample aliquot. The amounts of the sample solution and of the solvent taken into the sample loading tube nozzle are chosen such as to include a security reserve ensuring the complete filling of the central sample bore with the sample solution.

In principle, multiple well plate tray manipulation/handling may be achieved by using a drawer/paternoster lift system for precision positioning one or, in alternating mode, several well plates under the nozzles foreseen for sucking in the sample solution aliquots.

It is important that the interacting plate surfaces of the top stator plate and the bottom stator plate are lapped to a high degree of finish and that the slider plate is highly parallel at top and bottom sides in order to ensure high-pressure leak-free operation when moving the slider from its sample loading to its sample injection position.

Further characterising features and the advantages thereof may be found in the following description of an embodiment of the invention. The description, the figures and the claims contain multiple features in particular combinations. The skilled person may easily find other combinations or sub-combinations of the features without departing from the scope of the invention as set out in the independent claims.

### 4. Brief Description of the Drawings

- Fig. 1: is a schematic illustration of an apparatus for proportionating, injecting and routing analyte sample solutions according to the invention in a loading position,
- Fig. 2: is a schematic illustration of the apparatus according to Fig. 1 in an injecting position,
- Fig. 3: is a perspective view of the apparatus according to Figures 1 and 2,
- Fig. 4: is a side view of the apparatus according to Fig. 1 to 3,
- Fig. 5: is a top view of the apparatus according to Fig. 1 to 3,
- Fig. 6: is a side view of the apparatus according to Fig. 1 to 3, from the opposite direction to Fig. 4,
- Fig. 7: is the section along the line B-B in Fig. 6,
- Fig. 8: is a view of the apparatus according to Fig. 1 to 7 from below,
- Fig. 9: is a cross-sectional view of the apparatus along the line C-C in Fig. 8,
- Fig. 10: is a view of the detail D in Fig. 9,
- Fig. 11: is a view of the detail E in Fig. 10,
- Fig. 12: is a perspective view of a slider plate of the apparatus,
- Fig. 13: is a perspective view of a four-channel parallel sample injecting system with the apparatus for proportionating, injecting and routing analyte sample solutions according to the invention, with a well plate, with a well plate manipulator, and with a delivery system for intaking and/or discharging liquids and/or gas for each channel, and
- Fig. 14: is an illustration of one of the delivery systems for intaking and/or discharging liquids and/or gas in Fig. 13.

### 5. Detailed Description of an Embodiment of the Invention

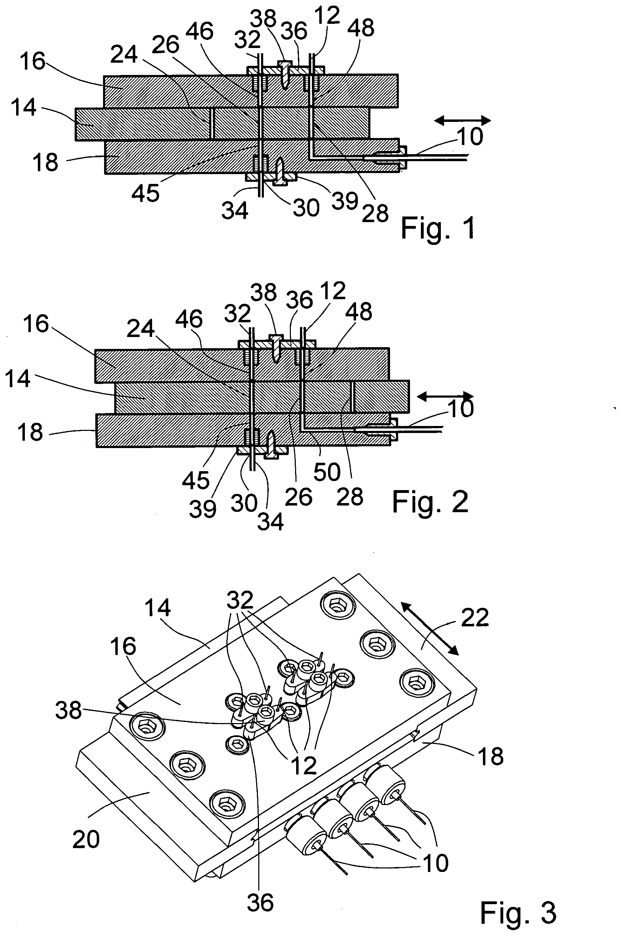

Fig. 1 is a schematic illustration of an apparatus for proportionating, injecting and routing analyte sample solutions in microlitre or nanolitre scale into high pressure fluid streams. In most applications, the fluid stream is routed from a solvent supply connection 10 to a connection 12 which is fluidicly connected e.g. to a liquid chromatography or capillary electrophoresis system (not shown).

The solvent supply connection 10 is connected to a high pressure solvent/buffer solution delivery system whereby the composition of the liquid in the filling stroke may be controlled by solenoids for forming low pressure side gradients (not shown).

The apparatus comprises the slider plate 14 sandwiched between a top stator plate 16 and a bottom stator plate 18 in such a way that a linear back and forth sliding motion of the slider plate 14 is enabled in the two directions indicated with the double arrow in Fig. 1 and 2.

For a mechanically precise alignment during motion of the slider plate 14 this is guided by means of two lateral guiding bars 20, 22 illustrated in Fig. 3. The motion of the slider plate 14 is effected by an actuator (not shown) which is configured to move the slider plate 14 from a sample loading position shown in Fig. 1 to a sample injecting position shown in Fig. 2.

The slider plate 14 is fitted with parallel rows of micro bores, each row comprising three bores 24, 26, 28. The three bores 24, 26, 28 have a diameter of e.g. 200 µm and are exactly aligned in a row with the row axis being congruent with the slider plate's motion axis 14.

In the sample loading position illustrated in Fig. 1, the central bore 26 of each row connects a sample intake connection 30 in the bottom stator plate 18 with a sample output connection 32 in the top stator plate 16. The sample output connection 32 is connected to a precision micro syringe (not shown) or to an alternatively suitable precision metering device. The sample intake connection 30 is a fitting connection bearing an intake nozzle 34 which may be immersed into the analyte solution in a well of a well plate (not shown) An aliquot of the sample solution is taken up into the sample bore 26. The volume of the sample aliquot equals to the volume of the central bore 26 and it is determined by the diameter and length of the bore 26.

Subsequent to complete filling of the bore 26 with the analyte solution, the slider plate 14 is moved into the sample injection position as illustrated in Fig. 2, in which position the loaded sample solution aliquot is injected into the high pressure fluid stream conveyed from connection 10 to connection 12 of the apparatus. In the sample injection position, the analyte solution aliquot is carried with the high pressure fluid stream and subsequently the sample bore 26 is filled with pure solvent/buffer solution fed from the pertinent delivery system. In the sample loading position (Fig. 1), the bore 28 in Fig. 1 and 2 connects the connections 10 and 12, whereas the bore 24 connects the sample intake connection 30 and the output connection 32 in the sample injection position.

Each of the connections 10 is a standard fitting connection for standard 1/16" outside diameter tubing, each of the connections 12, 32 and 34 a fitting connection for a fused silica capillary line with the capillary having a typical outer diameter of 360 µm and an inner diameter of e.g. 200 µm. The liquid channel connecting the sample intake nozzle 34 and the sample injection connection 32 represent the proportionating range of the sample loading liquid duct system and the channel connecting the solvent supply connection 10 and the outlet connection 12 represents the main fluid stream liquid duct system.

When the slider is being shifted into the sample loading position for sample solution intake, the central bore 26 in the slider plate 14 functions as a liquid duct between the sample intake bore 45 in the bottom stator plate and the sample solution discharge bore 46 in the top stator plate 16. In the sample injecting position, the central bore 26 in the slider plate 14 is aligned with a sample solution discharge bore 48 in the top stator plate and with a solvent supply bore 50 in the bottom stator.

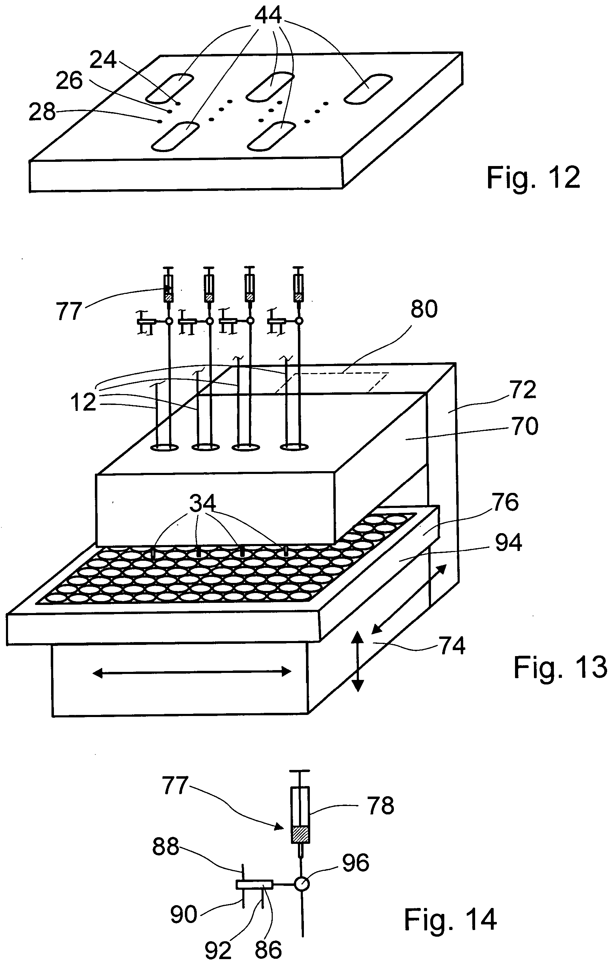

Fig. 3 shows a perspective view of the apparatus design described above. The four rows of bores in the slider plate 14 are arranged at positions corresponding to the positions of the four inlet connections 10 in the bottom stator plate 18. The distance between the rows of bores to the fluidicly corresponding rows of inlet connections 10 and the fluidicly corresponding outlet connections 32 is twice the distance of rows of wells wherein the sample solutions are stored on a standard well plate. The typical raster measure of standard well plates is 4.5 mm, entailing that the distance between the parallel rows of the bores 24, 26, 28 (c.f. Fig. 12) is 9 mm. The slider plate 14 is preferably made of an engineering ceramic, specifically zirconia. The top stator plate 16 and the bottom stator plate 18 are preferably made of PEEK.

The outlet connections 12 and 32 in the top stator plate 14 are particular fitting connections described in more detail below. The connections are held by a double-wing buckle 36 fixed with a central tensioning screw 38. The connection 10 is a standard fitting connection. The sample intake connection is a special fitting connection similar to the connections 12 and 32 at the top stator plate 16 but is combined only with the single-wing buckle 39. With both liquid connection types said wing buckle design exerts only axial and no twisting tensioning forces.

The double-wing buckles 36 tightened with tensioning screws 38 at the top stator plate 16 are each used to tighten a pair of outlet connections 12, 32 representing adjacent rows of liquid channels within the apparatus.

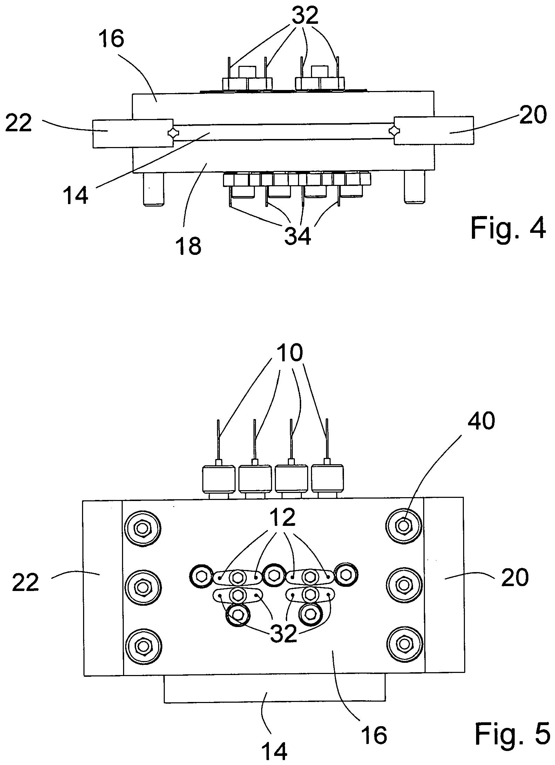

Fig. 5 is a top view of the apparatus showing six screws 40 compressing the top stator plate 16, the bottom stator plate 18 and the lateral guiding bars 20, 22 to a sandwiched stack. Further screws 42 are used to generate a defined preloading of the stack-structure which is effective evenly over the active area according to the invention comprising the top stator plate 16, the bottom stator plate 18 and the slider plate 14. The preloading may be effected e.g. by using spring disks or undulated springs (not shown).

Each of the preloading screws 42 is fed through one of five slot holes 44 arranged in parallel in the slider plate 14 as illustrated in Fig. 12. The slot holes 44 are arranged in parallel to the direction of movement of the slider plate for establishing a fluid connection between the top stator plate 16 and the bottom stator plate 18 through the pertinent bores in the slider plate 14.

The provision of the preloading screws 42 enables the generation of a uniformly distributed preloading at the interface areas between the top stator plate 16 and the base stator plate 18 on the one hand and the slider plate 14 on the other hand. The preloading is as such that at the interface areas liquid-tightness is achieved between plates 14, 16 and 18 preventing lateral and/or cross-over leakage occurring during operation of the injector and the analyses even at high pressure of up to 70 bar.

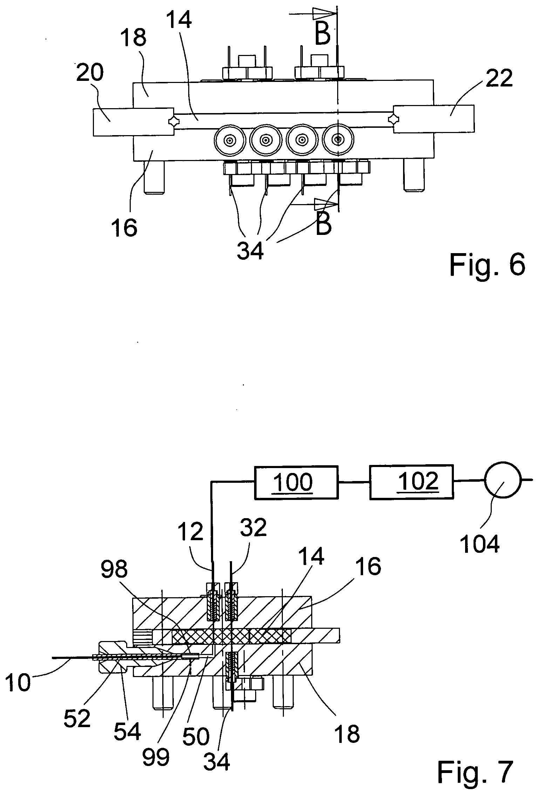

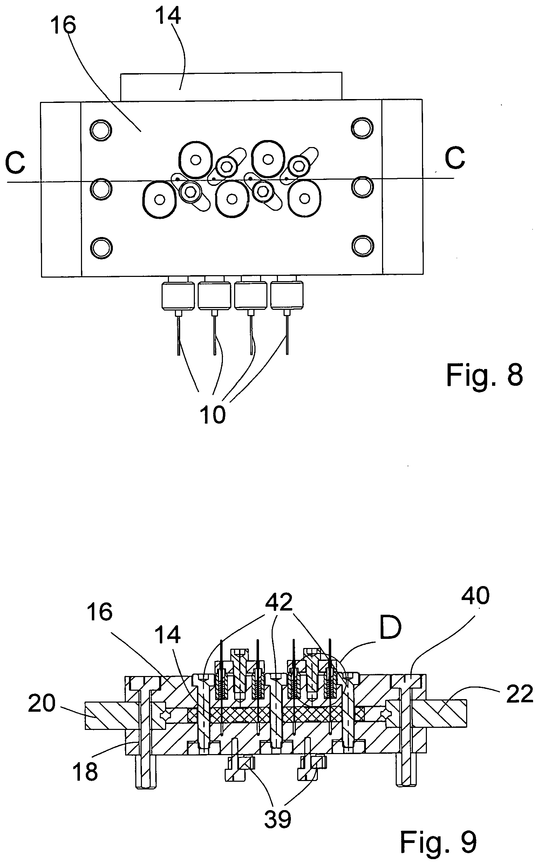

As shown in Figures 7 - 9, for coping with the machining of the given aspect ratio the solvent supply bore 50 has a diameter larger than those of the micro bores which are critical to the application and wetted by the analyte solution. The solvent supply bore 50 empties into an elbow duct allowing a liquid connection to the solvent supply connection 10 in lateral configuration to the bottom stator plate 18 by means of a standard fitting which may be fitted with a sleeve 52 as adapter bushing 54 for the case that e.g. fused silica capillaries are foreseen to establish the pertinent fluidic lines.

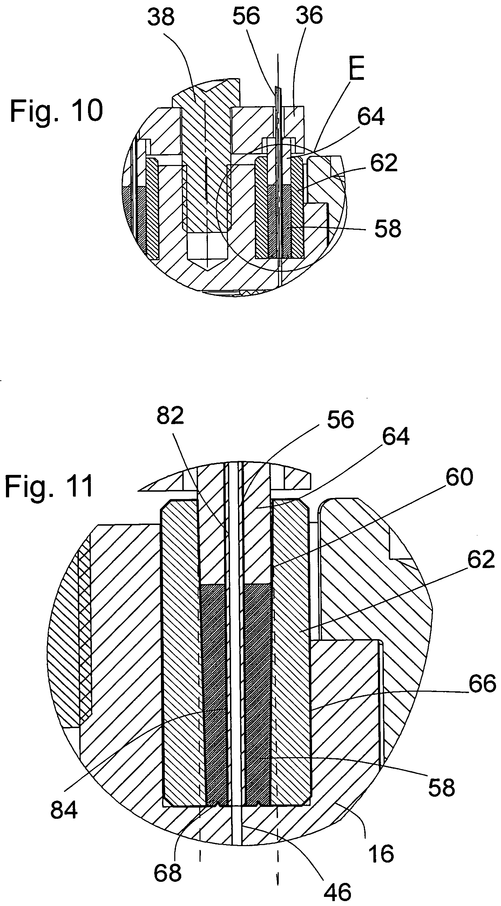

In Fig. 7, the solvent supply bore 50 is fitted with an electrode 98 for use in capillary electrophoresis (CE). The electrode 98 is an optional equipment of the apparatus and is formed as a cylindrical tube featuring a cross-sectional bore as direct flow-through liquid duct for the main fluid stream. The electrode 98 is liquid-tightly press-fitted into the bottom stator plate 18 and can be driven using an electrical conductor 99 for applying a voltage to the electrode 98. The material of the electrode 98 is preferably a noble metal such as gold or titanium. The main fluid stream passing the electrode 98 is further guided to the column 100 and to a multi-array analyzer 102. The multi-array analyzer 102 is followed by a counter-electrode 104 interacting with the electrode 98. In other embodiments of the invention, the electrode 98 may be formed as an integral part of the connection 54, which may be further fitted with a buffer vessel.
The non-standard fitting connections employed in the invention are illustrated in more detail with reference to Fig. 10 and Fig. 11. A capillary tube 56 is inserted into a polymer sealing bushing 58, preferably made of polytetrafluorethylene (PTFE) and pressed into the central bore 60 of a metallic backing bushing 62, preferably made of stainless steel or titanium by means of a metallic compression bushing 64. The capillary tube 56 is fed through central bores 82, 84 of the essentially cylindrical compression bushing 64 and sealing bushing respectively. The compression force exerted by the compression bushing 64 onto the sealing bushing 58 is generated by the double-wing buckle 36 or the single-wing buckle 39 fixed/set by the screw 38 described above.

The backing bushing 62 features a receiving bore 60 which has a conical shape exhibiting a diameter reducing towards the front end. Consequently, when the connection is being made, the sealing bushing 58 is compacted and thus exerts a radial surface sealing force onto the mantle of the capillary tube 56 along the contact section of the mantle of the capillary tube 56 and the radially inner surface of the bore 84. It is important to note that by avoiding only line contact, the sealing force acts in a gradual mode along the entire contact surface area of the capillary.

The backing bushing 62 is pressed and mounted into a corresponding receiving bore 66 in the top stator plate 16 or the bottom stator plate 18. In the centre of said receiving bore 66, the capillary tube 56 is adjusted with the respective bore 46, 48, 45 in the top or bottom stator plate 16, 18, with the inner diameter essentially corresponding to the inner diameter of the capillary tube 56. The bottom of the receiving bore 66 features a contour with a liquid tightness enhancing sealing structure 68, e.g. an annularly raised or alternatively, grooved profile, with dimensions designed for proper interacting with the end face of the sealing bushing 58.

With the liquid connection being mounted, the capillary tube 56 and the sealing bushing 58 form a functional assembly with its front side bottoming within the receiving bore 66. With the capillary having its end face cleaved at right angles and having a flat surface, this avoids any gap and dead volume within the interface area.

The apparatus according to the invention is operated in such a way that the stack with the stator plates 16, 18 is held stationary while the well plate is positioned by means of a movable support device enabling a horizontal and vertical positioning of the well plate in order to select the analyte solutions to be injected into the analytical system. With four intake nozzle tubes 34 (Fig. 4) separated by a distance of 9 mm, the distance between two wells in an 8x12 well plate, the apparatus according to the invention enables the parallel intake of analyte solution aliquots from four wells arranged in one row in such a well plate.

Filling one or more of the wells on the well plate with pure solvent/buffer solution facilitates an online cleaning/flushing of the capillary intake nozzle tube 34. Subsequent to injecting a sample solution aliquot, for an external cleaning of the sample intake nozzle tube, the tip of the capillary nozzle tube is repeatedly immersed into one or more well(s) containing pure solvent. For performing a cycle of internal flushes of the proportionating channel, a certain volume of pure solvent is drawn in and discharged to waste wells.

Subsequent to injecting a sample solution aliquot, as well as for an external cleaning of the sample intake nozzle tube, the tip of the capillary nozzle tube is repeatedly immersed into one or more well(s) containing pure solvent.

For performing a cycle to internally flush the proportionating channel, a certain volume of pure solvent is drawn in and subsequently discharged to waste wells.

The flexibility of the assembly may be upgraded by engaging 1+n well plates alternately made accessible by the pertinent well plate tray system 74 (Fig. 13).

Fig. 12 is a schematic representation of the slider plate 14 employed in the apparatus according to the invention. The slider plate 14 is provided with five notches or slot holes 44 and twelve micro bores arranged in four rows featuring three bores each. The slider plate 14 is made from an engineering ceramic material and the bores therein are machined prior to firing the blank piece and anticipating a slight shrinkage. The accurate volumetric size of each bore, which determines the sample volume, is assessed by an initial calibration run performed under actual analysis conditions. As it is of utmost importance that the sample bore 26 and the bores 50 and 48 in the top stator plate 16 and the bottom stator plate 18 are positioned at precisely flush position for sample injection (Fig. 2), said bores 48, 50 may be machined to comply with the actually precision-measured position of the sample bore 26. The same applies for bores 46 and 45 in the top stator plate 16 and the bottom stator plate 18 respectively.

Fig. 13 is a perspective view of a four-channel parallel sample injecting system with the apparatus for proportionating, injecting and routing analyte sample solutions according to the invention, with a well plate, with a well plate manipulator, and with a delivery system for each channel. The stack of plates is arranged in a housing 70 with a pedestal 72 supporting the apparatus in a stationary position, with the sample intake tube nozzles 34 held above a well plate manipulator 74 being equipped with three linear motors for moving a well plate 76 placed on an auxiliary tray 94 arranged on the well plate manipulator 74 in the x- y- and z-directions. The well plate manipulator 74 serves as a moveable support device for the well plate 76. By moving the well plate 76, the four intake tube nozzles 34 may be simultaneously immersed in a set of four wells. Sets of wells to be simultaneously served represent wells located in one row with a separation distance of two wells in a 96 well plate. An actuator 80 for positioning the slider plate 14 is arranged in the housing 70 and in the pedestal 72.

The sample intake connections 34 or outlet connections 32 in the top stator plate are connected to respective delivery systems 77 and/or a manifold 86 with solenoids connecting liquid and/or gas lines 88, 90, 92 to a microsyringe 78 via a switching valve 96 (Fig. 14).

Fig. 14 is an illustration of one of the delivery systems 77 in Fig. 13 in greater detail. A micro syringe 78 can be connected via a solenoid array 86 to either the connection 32 or to one out of three different liquid and/or gas lines 88, 90, 92. The line 88 may be used for supplying e.g. N₂ to the system, the lines 90 and 92 may be used for supplying liquid media to the system according to the specific analysis requirements.

The connections 12 are used for connecting the parallel sample injection system to a parallel array of chromatography columns or directly to an array of capillaries which pass through a multi-channel detector system.

**List of Reference Numbers**

| | | | |
|---|---|---|---|
| | | 60 | bore |
| 10 | solvent supply connection | 62 | backing bushing |
| | | 64 | compression bushing |
| 12 | connection | 66 | receiving bore |
| 14 | slider plate | 68 | sealing structure |
| 16 | stator plate | 70 | housing |
| 18 | stator plate | 72 | pedestal |
| 24 | bore | 74 | manipulator |
| 26 | bore | 76 | well plate |
| 28 | bore | 77 | delivery system |
| 30 | sample intake connection | 78 | micro syringe |
| | | 80 | actuator |
| 32 | connection | 82 | bore |
| 34 | nozzle | 84 | bore |
| 36 | buckle (dual wing) | 86 | solenoid manifold |
| 38 | screw | 88 | connection |
| 39 | buckle (single wing) | 90 | connection |
| 42 | preloading screw | 92 | connection |
| 44 | slot hole/notch | 94 | tray |
| 45 | bore | 96 | switching valve |
| 46 | bore | 98 | electrode |
| 48 | bore | 99 | conductor |
| 50 | solvent supply bore | 100 | column |
| 52 | sleeve | 102 | detector |
| 54 | bushing | 104 | counter-electrode |
| 56 | capillary tube | | |
| 58 | bushing | | |

## Claims

1. Apparatus for proportionating, injecting, and/or routing analyte sample solutions in microlitre or nanolitre scale into at least one high-pressure fluid stream,
comprising:
a. at least one slider plate (14) comprising at least one central bore (26) and two complementary bores (24, 28) in at least one row, wherein the volume of the central bore (26) in said row determines the sample solution volume to be injected and effects the proportionating of the sample solution,
b. a sample supply channel (30) connected to said central bore in a sample loading position of the slider plate (14) for loading an aliquot of the sample solution into said central bore (26), with one of said complementary bores (24, 28) in said row connecting a solvent/buffer supply inlet port (10) with a pertinent outlet connection (12) for sustaining the high-presssure fluid stream in the sample loading position,
c. an actuator (80) for moving the slider plate (14) from the sample loading position into a sample injection position in which the fluid stream passes through the central bore (26) so as to inject the sample solution volume into the fluid stream, and
d. a top stator plate (16) and a bottom stator plate (18) sandwiching the slider plate (14) which is supported such as to enable a linear movement of the slider plate (14) between its loading position and the sample injection position,
**characterized in that** said supply inlet port (10) and said outlet connection (12) are connected to a capillary tube (56) by means of a fitting connection respectively, said fitting connection being
provided on the top stator plate (16) or on the bottom stator plate (18), wherein at least one of said fitting connections comprises an assembly comprising a compression bushing (64), a backing bushing (62) and a sealing bushing (58) being fixed by means of a buckle element (36, 39) having at least one wing such that only axial and no torsion compression forces are exerted onto the assembly, wherein:
• the backing bushing (62) has a bore (60) for pressing the sealing bushing (58) and the compression bushing (64) into the backing bushing (62) and wherein the sealing bushing (58) and the compression bushing (64) are each provided with a central bore (82, 84) for feeding through a capillary tube (56),
• the bore (60) of the backing bushing has a partly slightly conical bore end for achieving a grouting of the sealing bushing (58) such that the inner wall- of the central bore (84) of the sealing bushing (58) exerts a surface pressure being effective in radial direction onto the whole of the circumference of the external wall of the capillary (56) end within the contact area between the external wall of the capillary (56) and the inside surface of the central bore (84).

2. Apparatus according to claim 1, **characterised in that** the slider plate (14) comprises at least two rows of bores (24, 26, 28) comprising at least one central bore (26) and two complementary bores (24, 28) each for routing at least two fluid streams to be loaded in parallel with sample solutions.

3. Apparatus according to one of the preceding claims, **characterised by** further comprising a moveable support device (74) enabling at least an horizontal and vertical positioning of a well plate (76) containing the sample solutions.

4. Apparatus according to claims 2 and 3, **characterised in that** the distance of the adjacent rows of bores (24, 26, 28) in the slider plate (14) is twice the distance of the wells containing the sample solutions in the well plate (76), said distance being 4,5mm.

5. Apparatus according to one of the preceding claims, **characterised in that** at least the slider plate (14) is made of engineering ceramics such as zirconia (TZP-Y), alumina, silicon nitride, silicon carbide or a special polymer such as pure or filled PEEK.

6. Apparatus according to one of the preceding claims, **characterised in that** the slider plate (14) features at least one slot hole (44) for receiving an element uniformly preloading the top stator plate (16), the bottom stator plate (18), and the slider plate (14) against each other for the provision of intermediary liquid tight sealing.

7. Apparatus according to at least one of the preceding claims, **characterised in that** the top stator plate (16) and the bottom stator plate (18) are fitted with liquid connections for connecting at least a sample loading tube and a fluid stream tube to the pertinent channels.

8. Apparatus according to at least one of the preceding claims, **characterised in that** each central bore (26) in the slider plate is fluidicly connected with:
a. a sample solution intake bore (**45)** in the bottom stator plate (18) serving as said sample supply channel and a sample solution discharge bore (46) in the top stator plate (16) when the slider plate (14) is held in its sample solution loading position, and
b. a solvent/buffer solution supply duct(50) within the bottom stator plate (18) serving as said **solvent/buffer supply inlet port** and a sample solution discharge bore (48) in the top stator plate (16) when the slider plate (14) is held in its sample injection position.

9. Apparatus according to one of the preceding claims, **characterized in that** the bottom stator plate (18) comprises a press-fitted electrode with a cross-bore as a duct for the fluid stream allowing applying a voltage between said electrode and an electrode positioned at the distant end of the pertinent liquid channel system.

10. Apparatus according to one of the preceding claims, **characterized in that** said buckle element (39) is a dual wing buckle element for fixedly mounting two liquid connections simultaneously.

## Patentansprüche

1. Vorrichtung zur Proportionierung, Injektion und/oder zum Routing von Analytprobenlösungen in Mikroliter- oder Nanolitermengen in zumindest einen Hochdruck-Fluidstrom, umfassend:
a. zumindest eine Schieberplatte (14), die zumindest eine zentrale Bohrung (26) und zwei ergänzende Bohrungen (24, 28) in zumindest einer Reihe umfasst, wobei das Volumen der zentralen Bohrung (26) in dieser Reihe das aufzugebende Probenlösungsvolumen bestimmt und das Proportionieren der Proben bewirkt,
b. ein Probenzufuhrkanal (30), der in einer Probeneingabenposition der Schieberplatte (14) zum Eingeben eines Aliquots der Probenlösung in die zentrale Bohrung (26) mit dieser zentralen Bohrung verbunden ist, wobei eine der ergänzenden Bohrungen (24, 26) in dieser Reihe einen Lösungsmittel/Pufferversorgungs-Einlassanschluss (10) mit einem zugehörigen Auslassanschluss (12) verbindet, um dem Hochdruck-Flüssigkeitsstrom in der Probenaufgabeposition aufrecht zu erhalten,
c. einen Aktuator (80) zum Bewegen der Schieberplatte (14) aus der Probeneingabenposition in eine Probeninjektionsposition, in welcher der Fluidstrom durch die zentrale Bohrung (26) verläuft, um das Probenlösungsvolumen in den Fluidstrom zu aufzugeben, und
d. eine obere Statorplatte (16) und eine untere Statorplatte (18), welche die Schieberplatte (14), welche so geführt ist, dass eine Linearbewegung der Schieberplatte (14) zwischen ihrer Eingabeposition und der Probenaufgabeposition möglich ist, sandwichartig einschließen,
**dadurch gekennzeichnet, dass** der Versorgungseinlassanschluss (10) und der Auslassanschluss (12) jeweils mittels einer Fittingverbindung mit einem Kapillarrohr (56) verbunden sind, wobei die Fittingverbindung auf der oberen Statorplatte (16) oder auf der unteren Statorplatte (18) vorgesehen
ist, wobei zumindest eine dieser Fittingverbindungen eine Anordnung umfasst, welche eine Presshülse (64), eine Stützhülse (62) und eine Dichthülse (58) umfasst, die mit Hilfe eines Bridenelements (36, 39) befestigt sind, welches zumindest einen Flügel hat, sodass nur Axial- und keine Torsions-Kompressionskräfte auf die Anordnung ausgeübt werden,
wobei:
- die Stützhülse (62) eine Bohrung (60) zum Pressen der Dichthülse (58) und der Presshülse (64) in die Stützhülse (62) hat, und wobei die Dichthülse (58) und die Presshülse (64) jeweils mit einer zentralen Bohrung (82, 84) zur Durchführung eines Kapillarrohrs (56) ausgestattet sind,
- die Bohrung (60) der Stützhülse ein teilweise leicht konisches Bohrungsende hat, welches eine Verpressung der Dichthülse (58) derart bewirkt, dass die Innenwand der zentralen Bohrung (84) der Dichthülse (58) einen Oberflächendruck ausübt, der in radialer Richtung auf den gesamten Umfang der Außenwand des Endes des Kapillarrohrs (56) innerhalb der Kontaktfläche zwischen der Außenwand des Kapillarrohrs (56) und der Innenwand der zentralen Bohrung (84) wirkt.

2. Vorrichtung nach Anspruch 1, **dadurch gekennzeichnet, dass** die Schieberplatte (14) zumindest zwei Reihen von Bohrungen (24, 26, 28) umfasst, welche zumindest eine zentrale Bohrung (26) und zwei ergänzende Bohrungen (24, 28) umfassen, die jeweils wenigstens zwei parallel mit Probenlösungen zu beladende Flüssigkeitsströme verbinden.

3. Vorrichtung nach einem der vorhergehenden Ansprüche, **gekennzeichnet dadurch, dass** sie ferner eine bewegliche Trägervorrichtung (74) umfasst, welche zumindest eine horizontale und vertikale Positionierung einer Titerplatte (76) ermöglicht, welche die Probenlösungen enthält.

4. Vorrichtung nach Anspruch 2 und 3, **dadurch gekennzeichnet, dass** der Abstand der benachbarten Reihen von Bohrungen (24, 26, 28) in der Schieberplatte (14) den doppelten Abstand der Mulden hat, welche in der Titerplatte (76) die Probenlösungen enthalten, wobei dieser Abstand 4,5 mm beträgt.

5. Vorrichtung nach einem der vorhergehenden Ansprüche, **dadurch gekennzeichnet, dass** zumindest die Schieberplatte (14) aus technischer Keramik, beispielsweise Zirkonoxidkeramik (TZP-Y), Aluminiumoxidkeramik, Siliziumnitridkeramik, Siliziumcarbidkeramik oder einem Spezialpolymer wie beispielsweise reinem oder gefülltem PEEK, hergestellt ist.

6. Vorrichtung nach einem der vorhergehenden Ansprüche, **dadurch gekennzeichnet, dass** die Schieberplatte (14) zumindest ein Spaltloch (44) zum Aufnehmen eines Elements hat, welches die obere Statorplatte (16), die untere Statorplatte (18) und die Schieberplatte (14) gleichmäßig zu einander verspannt, um zwischen diesen eine flüssigkeitsdichte Abdichtung herzustellen.

7. Vorrichtung nach einem der vorhergehenden Ansprüche, **dadurch gekennzeichnet, dass** die obere Statorplatte (16) und die untere Statorplatte (18) Flüssigkeitsanschlüsse zum Anschließen zumindest einer Probenzuführungsleitung und einer Leitung des Flüssigkeitsstroms an die zugehörigen Kanäle aufweisen.

8. Vorrichtung nach einem der vorhergehenden Ansprüche, **dadurch gekennzeichnet, dass** jede zentrale Bohrung (26) der Schieberplatte fluidisch verbunden ist mit:
a. einer Probenzuführungsbohrung (45) in der unteren Statorplatte (18), die als der Probenzufuhrkanal dient, und einer Probenlösungsauslassbohrung (46) in der oberen Statorplatte (16), wenn die Schieberplatte (14) in ihrer Probenaufgabestellung gehalten wird, und
b. eine Lösungsmittel/Pufferlösungszufurhleitung (50) innerhalb der unteren Statorplatte (18), die als der Lösungsmittel/Pufferlösungsversorgungs-Einlassanschluss dient, und eine Probenlösungsauslassbohrung (48) in der oberen Statorplatte (16), wenn die Schieberplatte (14) in ihrer Probeninjektionsposition gehalten wird.

9. Vorrichtung nach einem der vorhergehenden Ansprüche, **dadurch gekennzeichnet, dass** die untere Statorplatte (18) eine eingepresste Elektrode mit einer Querbohrung als Leitung für den Fluidstrom umfasst, welche das Anlegen einer Spannung zwischen der Elektrode und einer am auslassseitigen Ende des zugehörigen Flüssigkeitskanalsystems angeordneten Elektrode ermöglicht.

10. Vorrichtung nach einem der vorhergehenden Ansprüche, **dadurch gekennzeichnet, dass** das Bridenelement (39) ein Bridenelement mit zwei Flügeln ist, welches das gleichzeitige Festklemmen von zwei Flülssigkeitsanschlüssen ermöglicht.

## Revendications

1. Appareil pour doser, injecter, et/ou acheminer des solutions échantillons d'analyte à l'échelle du microlitre ou du nanolitre dans au moins un courant de fluide haute pression, comprenant :
a. au moins une plaquette coulissante (14) comprenant au moins un alésage central (26) et deux alésages complémentaires (24, 28) en au moins une rangée, dans lequel le volume de l'alésage central (26) dans ladite rangée détermine le volume de solution échantillon à injecter et affecte le dosage de la solution échantillon,
b. un canal (30) d'alimentation d'échantillon connecté audit alésage central dans une position de chargement d'échantillon de la plaquette coulissante (14) pour charger une aliquote de la solution échantillon dans ledit alésage central (26), avec un desdits alésages complémentaires (24, 28) dans ladite rangée connectant un orifice (10) d'entrée d'alimentation de solvant/tampon avec une connexion (12) de sortie appropriée à subir le courant de fluide haute pression dans la position de chargement d'échantillon,
c. un actionneur (80) pour déplacer la plaquette coulissante (14) de la position de chargement d'échantillon à une position d'injection d'échantillon dans laquelle le courant de fluide passe à travers l'alésage central (26) de façon à injecter le volume de solution échantillon dans le courant de fluide, et
d. une plaquette supérieure (16) de stator et une plaquette inférieure (18) de stator prenant en sandwich la plaquette coulissante (14) qui est supportée de manière à permettre un mouvement linéaire de la plaquette coulissante (14) entre sa position de chargement et la position d'injection d'échantillon,
**caractérisé en ce que** ledit orifice (10) d'entrée d'alimentation et ladite connexion (12) de sortie sont connectés à un tube capillaire (56) au moyen d'une connexion de raccordement respectivement, ladite connexion de raccordement étant prévue sur la plaquette supérieure (16) de stator ou sur la plaquette inférieure (18) de stator, dans lequel au moins une desdites connexions de raccordement comprend un ensemble comprenant une bague de compression (64), une bague d'appui (62) et une bague d'étanchéité (58) étant fixé au moyen d'un élément de collier (36, 39) ayant au moins une ailette de telle sorte que des forces de compression uniquement axiales et non en torsion sont exercées sur l'ensemble, dans lequel :
• la bague d'appui (62) a un alésage (60) pour presser la bague d'étanchéité (58) et la bague de compression (64) dans la bague d'appui (62) et dans lequel la bague d'étanchéité (58) et la bague de compression (64) sont chacune prévues avec un alésage central (82, 84) pour alimentation à travers un tube capillaire (56),
• l'alésage (60) de la bague d'appui a une extrémité d'alésage partiellement légèrement conique pour réaliser un scellement de la bague d'étanchéité (58) de telle sorte que la paroi intérieure de l'alésage central (84) de la bague d'étanchéité (58) exerce une pression superficielle étant efficace dans le sens radial sur la totalité de la circonférence de la paroi externe de l'extrémité du capillaire (56) à l'intérieur de la zone de contact entre la paroi externe du capillaire (56) et la surface intérieure de l'alésage central (84).

2. Appareil selon la revendication 1, **caractérisé en ce que** la plaquette coulissante (14) comprend au moins deux rangées d'alésages (24, 26, 28) comprenant au moins un alésage central (26) et deux alésages complémentaires (24, 28), chacun pour acheminer au moins deux courants de fluides à charger en parallèle avec des solutions échantillons.

3. Appareil selon l'une des revendications précédentes, **caractérisé en ce que** comprenant en outre un dispositif mobile (74) de support permettant au moins un positionnement horizontal et vertical d'une plaque (76) à puits contenant les solutions échantillons.

4. Appareil selon les revendications 2 et 3, **caractérisé en ce que** la distance des rangées adjacentes d'alésages (24, 26, 28) dans la plaquette coulissante (14) est deux fois la distance des puits contenant les solutions échantillons dans la plaque (76) à puits, ladite distance étant 4,5 mm.

5. Appareil selon l'une des revendications précédentes, **caractérisé en ce qu'**au moins la plaquette coulissante (14) est constituée d'une céramique technique telle qu'une zircone (TZP-Y), une alumine, un nitrure de silicium, un carbure de silicium ou un polymère spécial tel qu'un PEEK pur ou chargé.

6. Appareil selon l'une des revendications précédentes, **caractérisé en ce que** la plaquette coulissante (14) présente au moins un trou en fente (44) pour recevoir un élément pré-chargeant uniformément la plaquette supérieure (16) de stator, la plaquette inférieure (18) de stator, et la plaquette coulissante (14) les unes contre les autres pour la création d'une étanchéité intermédiaire aux liquides.

7. Appareil selon au moins une des revendications précédentes, **caractérisé en ce que** la plaquette supérieure (16) de stator et la plaquette inférieure (18) de stator sont dotées de connexions de liquides pour connecter au moins un tube de chargement d'échantillons et un tube de courant de fluide aux canaux correspondants.

8. Appareil selon au moins une des revendications précédentes, **caractérisé en ce que** chaque alésage central (26) dans la plaquette coulissante est en connexion de fluide avec :
a. un alésage d'entrée (45) de solution échantillon dans la plaquette inférieure (18) de stator servant comme ledit canal d'alimentation d'échantillon et un alésage de décharge (46) de solution échantillon dans la plaquette supérieure (16) de stator lorsque la plaquette coulissante (14) est maintenue dans sa position de chargement de solution échantillon, et
b. une conduite (50) d'alimentation de solvant/de solution tampon à l'intérieur de la plaquette inférieure (18) de stator servant comme ledit orifice d'entrée d'alimentation de solvant/tampon et un alésage de décharge (48) de solution échantillon dans la plaquette supérieure (16) de stator lorsque la plaquette coulissante (14) est maintenue dans sa position d'injection d'échantillon.

9. Appareil selon l'une des revendications précédentes, **caractérisé en ce que** la plaquette inférieure (18) de stator comprend une électrode à ajustage par pression avec un alésage transversal comme une conduite pour le courant de fluide permettant l'application d'une tension entre ladite électrode et une électrode positionnée à l'extrémité distante du système de canaux de liquides correspondants.

10. Appareil selon l'une des revendications précédentes, **caractérisé en ce que** ledit élément (39) de collier est un élément de collier à double ailette pour monter de façon fixe deux connexions de liquides simultanément.
